# EUROPÄISCHE PATENTSCHRIFT

(11) **EP 0 846 270 B1**
(45) Veröffentlichungstag und Bekanntmachung des Hinweises auf die Patenterteilung: **02.07.2003**
(21) Anmeldenummer: 96945554.2
(22) Anmeldetag: 27.11.1996
(51) Int. Cl.: G01P 3/44

(54) **DREHZAHLMESSSYSTEM MIT EINEM UMLAUFENDEN BEREICHSWEISE MAGNETISIERTEN ROTOR**
SPEED OF ROTATION MEASURING SYSTEM WITH A ROTOR HAVING MAGNETISED SECTIONS
SYSTEME DE MESURE DE LA VITESSE DE ROTATION AVEC UN ROTOR MAGNETISE PAR SECTIONS

(30) Priorität: 26.06.1996 DE 19625489
(43) Veröffentlichungstag der Anmeldung: 10.06.1998
(73) Patentinhaber: ROBERT BOSCH GMBH, 70442 Stuttgart (DE)
(72) Erfinder: HERDERICH, Hans-Juergen, D-71394 Kernen (DE); McCARTHY, Craig, Anderson, SC 29624 (US)
(86) Internationale Anmeldenummer: DE9602272
(87) Internationale Veröffentlichungsnummer: WO97049995

(56) Entgegenhaltungen:
- EP-A- 0 420 040
- EP-A- 0 518 157

## Beschreibung

### Stand der Technik:

Die Erfindung geht von einem in einer Kraftfahrzeugradlagerung integrierten Drehzahlmeßsystem mit einem umlaufenden bereichsweise magnetisierten Rotor nach dem Oberbegriff des Anspruchs 1 aus.

Ein derartiger Gegenstand ist beispielsweise aus der EP 0 518 157 A1 bekannt. Dort wird ein Drehzahlmeßsystem beschrieben, dessen Sensor und magnetisierter Rotor an einem Wälzlager installiert ist. Der umlaufende Wälzlageraußenring trägt an einer seiner Stirnflächen den magnetisierten Rotor. In axialer Richtung ist gegenüber dem Rotor der Sensor angeordnet. Letzterer sitzt dazu in einem am Wälzlagerinnenring befestigten Ring. Dieser hat hierzu ein Profil, das zum einen den Sensor umgreift, und zum anderen über den Wälzlageraußenring hinauskragt. Zwischen dem Rand des hinauskragenden Abschnitts und der zylindrischen Außenfläche des Wälzlageraußenringes ist ein schmaler Spalt vorhanden, vor dem in geringem Abstand ein Magnet angeordnet ist.

In der EP 0 420 040 B1 ist ein Drehzahlmesssystem für ein Kraftfahrzeug beschrieben, bei dem der polarisierte, magnetische Ring mit Hilfe einer metallischen Manschette auf dem Radnabenlager befestigt ist. Die Manschette dient ferner auch zur Leitung des Magnetflusses und kann metallische Partikel abschirmen. Der Spalt zwischen der magnetischen Stirnseite des Rings und des Sensors verbleibt hingegen ungeschützt, so dass nach wie vor die für den Messvorgang wesentliche Stirnseite des Magneten ungeschützt verbleibt und hier metallische Verunreinigungen angesaugt werden können.

Der Magnet hat die Aufgabe, magnetische oder magnetisierbare Verschmutzungen, wie zum Beispiel Bremsenabrieb und andere im Rahmen eines üblichen Verschleißes entstehende Partikel oder Späne anzuziehen und zu sammeln, bevor sie durch den schmalen Spalt zum magnetisierten Rotor des Drehzahlmeßsystems gelangen und dort gegebenenfalls die Sensorwirkung beeinträchtigen.

### Vorteile der Erfindung:

Bei dem Gegenstand der Erfindung ist der Rotor auf einem magnetisierbaren Träger angeordnet, dessen freie Rückseite dem Spaltraum zwischen dem Radträger und dem benachbarten und/oder gegenüberliegenden Radnaben- oder Wellenteil zugewandt ist. Da der Träger aus einem magnetisierbaren Werkstoff hergestellt ist, wird er durch den an ihm angeordneten Rotor magnetisiert. Damit hat seine freie Rückseite die Wirkung eines Magneten. Folglich schirmt der Träger den Rotor gegenüber magnetisierbaren Verschmutzungen, die über dem Spaltraum zwischen den relativ zueinander bewegten Radlagerteilen an den Rotor gelangen könnten, ab. Auf diese Weise benötigt der Gegenstand der Erfindung bei gleicher Wirkung wie beim zitierten Stand der Technik weniger Bauteile, ein geringeres Gewicht und einen kleineren Bauraum.

Der Rotor, ein z.B. segmentweise aufmagnetisierter vielpoliger Ring, kann eine zu seiner Rotationsachse symmetrische Form mit nahezu beliebiger Kontur haben. Beispielsweise ist er ein Ring, dessen zylindrische und/oder plane Kontur magnetisiert ist. Entsprechend seiner Magnetisierungsrichtung und der Anordnung des Sensors ist der Träger gestaltet. Letzterer kann dabei u.a. ein Ring mit zylindrischer oder planer Kontaktfläche für den Rotor sein.

Der Ort des Rotors und seines Trägers ist innerhalb der Radlagerung frei wählbar. Als praktisch erwiesen hat sich eine Anordnung im Randbereich des Wälzlagers.

### Zeichnungen:

Weitere Einzelheiten der Erfindung ergeben sich aus den abhängigen Ansprüchen und der nachfolgenden Beschreibung einer schematisch dargestellten Ausführungsform:

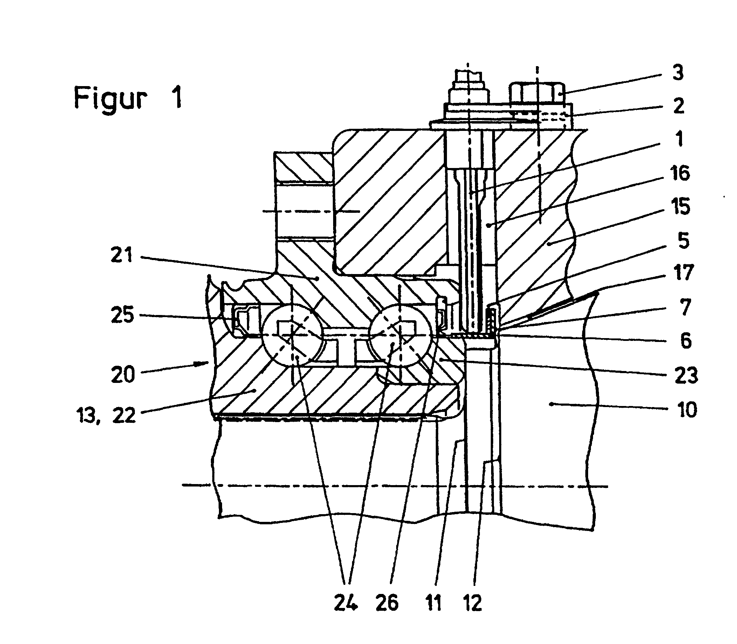

- Figur 1:: Ausschnitt einer Kraftfahrzeugradlagerung mit einem Drehzahlmeßsystem.

### Beschreibung des Ausführungsbeispiels:

Das Drehzahlmeßsystem nach Figur 1 ist hier in einer Radlagerung einer Kraftfahrzeugantriebsachse integriert. Ein nicht dargestelltes Antriebsrad ist mit Hilfe eines zweireihigen Schrägkugellagers (20), das u.a. einen Außenring (21) und zwei Innenringe (22, 23) hat, an einem Radträger (15) gelagert. Zumindest ein Teil (13) der Radnabe des Antriebsrads ist der - bezüglich der Achsmitte - äußere Innenring (22) des Schrägkugellagers (20). Dieser Innenring (22) sitzt über eine Kerboder Zahnwellenverzahnung auf einer Antriebswelle (10). Der innerer Innenring (23) des Schrägkugellagers (20) ist zwischen dem äußeren Innenring (22) und einer Wellenschulter (11) der Antriebswelle (10) eingespannt. Der flanschförmige Außenring (21) des Schrägkugellagers (20) ist mit dem Radträger (15) verschraubt. Beidseits der Wälzkörper (24) sind die Wälzlagerdichtringe (25) und (26) angeordnet.

Im Radträger (15) sitzt in einer annähernd senkrecht zur Raddrehachse ausgerichteten Bohrung (16) ein Drehzahlsensor (1) eines Antiblockiersystems. Der Drehzahlsensor (1) ist über einen Kragarm (2) und eine Sechskantschraube (3) am Radträger (15) befestigt. Er ragt in einen zwischen dem Wälzlager (20) und einem Wellenbund (12) der Antriebswelle (10) vorhandenen Hohlraum hinein. Am inneren Innenring (23) ist an dessen dem Außenring (21) zugewandten zylindrischer Fläche außerhalb des Wälzlagerdichtrings (26) ein Ring (6) mit winkelförmigem Teilquerschnitt angeordnet. Dieser Winkelring (6), der aus einem magnetisierbaren Material besteht, sitzt mit seinem zylindrischen Abschnitt auf dem Innenring (23), beispielsweise mittels eines Querpreßsitzes oder einer Klebeverbindung. Der planscheibenförmige Abschnitt des Winkelrings (6) ist zur Achsmitte hin orientiert. Auf seiner dem Wälzlager (20) und dem Drehzahlsensor (1) zugewandten Seite trägt er einen Multipolring (5).

Zur Erleichterung der Montage des Winkelrings (6) kann in den Innenring (23) eine Anschlagwellenschulter eingearbeitet sein. Alternativ hierzu kann auch an dem Winkelring (6) im Bereich seines zylindrischen Abschnitts ein zumindest bereichsweise umlaufender Anschlag, beispielsweise in Form einer Sicke, angeformt sein. Gegebenenfalls kann dieser Abschnitt auch einen z-förmigen Querschnitt haben. Diese konstruktiven Maßnahmen ermöglichen einen axialen Anschlag für die Montage des Winkelrings (6).

Auf der Höhe des Multipolrings (5) befindet sich im Bereich der Rückseite (7) des Winkelrings (6) ein Spaltraum (17). Der Spaltraum (17) ist der Raum zwischen dem Radträger (15) und dem dortigen, rotierenden Abschnitt der Antriebswelle (10), der sich zur Achsmitte hin an den Wellenbund (12) anschließt.

In diesem Abschnitt befindet sich oft die Gelenkglocke eines homokinetischen Gleichlaufgelenks.

## Patentansprüche

1. Kraftfahrzeugradlagerung mit einem integrierten Drehzahlmesssystem, mit einem Rad, einem Radträger (15) und einer Antriebswelle (10), wobei der Radträger (15) und die Antriebswelle (10) so angeordnet sind, dass sich zwischen dem Radträger (15) und dem benachbarten, gegenüberliegenden Radnaben- oder Antriebswellenteil ein Spaltraum (17) ergibt, mit mindestens einem am Radträger (15) befestigten Sensor (1) und mindestens einem am Rad oder dessen ebenfalls umlaufenden Antriebswellenteilen befestigten, bereichsweise magnetisierten Rotor (5), wobei der Rotor (5) gegen Verschmutzung durch magnetisierbare Partikel oder Späne magnetisch abgeschirmt ist, indem der Rotor (5) auf einem magnetisierbaren Träger (6) angeordnet ist, dessen Rückseite (7) dem Spaltraum (17) zugewandt ist.

2. Kraftfahrzeugradlagerung gemäß Anspruch 1, **dadurch gekennzeichnet, dass** der Träger (6) ein winkelprofilförmiger Ring ist.

3. Kraftfahrzeugradlagerung gemäß Anspruch 1, **dadurch gekennzeichnet, dass** der Träger (6) an umlaufenden, jeweils mindestens einteiligen Außen- oder Innenring (21, 22, 23) eines Wälzlagers (20) der Radlagerung angeordnet ist.

4. Kraftfahrzeugradlagerung gemäß Anspruch 1, **dadurch gekennzeichnet, dass** der Träger (6) an der zylindrischen Fläche des umlaufenden Außen- oder Innenrings (21, 22, 23) eines Wälzlagers (20) der Radlagerung mit Hilfe eines Querpresssitzes befestigt ist.

5. Kraftfahrzeugradlagerung gemäß Anspruch 1, **dadurch gekennzeichnet, dass** die Wandungsdurchmesser des Spaltraums (17) zwischen dem Radträger (15) und dem benachbarten, gegenüberliegenden Radnaben - oder Wellenteil mit zunehmendem Abstand vom Träger (6) größer werden.

## Claims

1. Motor-vehicle wheel mounting having an integrated rotational-speed-measuring system, having a wheel, a wheel support (15) and a drive shaft (10), the wheel support (15) and the drive shaft (10) being arranged in such a manner that a gap (17) is produced between the wheel support (15) and the adjacent, opposite wheel-hub or drive shaft part, having at least one sensor (1) fastened to the wheel support (15), and at least one rotor (5) which is fastened to the wheel or its likewise revolving drive shaft parts and is magnetized in some regions, the rotor (5) being magnetically shielded against contamination by magnetizable particles or chips by the rotor (5) being arranged on a magnetizable support (6), the rear side (7) of which faces the gap (17).

2. Motor-vehicle wheel mounting according to Claim 1, **characterized in that** the support (6) is a ring in the shape of an angular profile.

3. Motor-vehicle wheel mounting according to Claim 1, **characterized in that** the support (6) is arranged on a revolving, in each case at least single-part, outer or inner ring (21, 22, 23) of a rolling bearing (20) of the wheel mounting.

4. Motor-vehicle wheel mounting according to Claim 1, **characterized in that** the support (6) is fastened to the cylindrical surface of the revolving outer or inner ring (21, 22, 23) of a rolling bearing (20) of the wheel mounting with the aid of a transverse press fit.

5. Motor-vehicle wheel mounting according to Claim 1, **characterized in that** the wall diameters of the gap (17) between the wheel support (15) and the adjacent, opposite wheel hub or shaft part become larger with increasing distance from the support (6).

## Revendications

1. Palier de roue de véhicule intégrant un système de mesure de la vitesse de rotation comprenant une roue, un support de roue (15) et un arbre d'entraînement (10), le support de roue (15) et l'arbre d'entraînement (10) étant installés pour laisser un intervalle (17) entre le support de roue (15) et la partie de moyeu de roue ou d'arbre d'entraînement voisine, opposée, avec au moins un capteur fixé au support de roue (15) et au moins un rotor aimanté par zone (5), fixé à la roue ou à des parties d'arbre d'entraînement tournant également, le rotor (5) étant protégé de manière magnétique contre l'encrassage par des particules ou des copeaux susceptibles d'être aimantés,
**caractérisé en ce que**
le rotor (5) est prévu sur un support (6) susceptible d'être aimanté et dont le côté arrière (7) est tourné vers l'intervalle (17).

2. Palier de roue de véhicule selon la revendication 1,
**caractérisé en ce que**
le support (6) est un anneau à section pliée.

3. Palier de roue de véhicule selon la revendication 1,
**caractérisé en ce que**
le support (6) porte sur un palier de roulement (20) du palier de roue, au moins à chaque fois une bague extérieure et une bague intérieure (21, 22, 23).

4. Palier de roue de véhicule selon la revendication 1,
**caractérisé en ce que**
le support (6) est fixé sur la surface cylindrique de la bague extérieure ou intérieure périphérique (21, 22, 23) d'un palier de roulement (20) du palier de roue par l'intermédiaire d'un siège pressé transversalement.

5. Palier de roue de véhicule selon la revendication 1,
**caractérisé en ce que**
le diamètre de la paroi de l'intervalle (17) entre le support de roue (15) et le moyeu de roue voisin, en regard ou partie d'arbre, augmente en fonction de la distance par rapport au support (6).
